Europäisches Patentamt

European Patent Office

Office européen des brevets

(19)

(11) Publication number: **0 020 871**
**B1**

# EUROPEAN PATENT SPECIFICATION

(45) Date of publication of patent specification: **21.03.84**

(51) Int. Cl.³: **B 23 K  7/10**

(21) Application number: **80101483.8**

(22) Date of filing: **20.03.80**

(54) **Apparatus and method for sensing torch height.**

(30) Priority: **20.03.79 PC T/US79/00174**

(43) Date of publication of application:
**07.01.81 Bulletin 81/1**

(45) Publication of the grant of the patent:
**21.03.84 Bulletin 84/12**

(84) Designated Contracting States:
**BE DE FR GB IT NL SE**

(56) References cited:
**BE - A -  868 655**
**FR - A - 2 211 321**
**US - A - 2 364 645**
**US - A - 2 534 958**
**US - A - 2 949 391**

(73) Proprietor: **CATERPILLAR TRACTOR CO.**
**100 Northeast Adams Street**
**Peoria Illinois 61629 (US)**

(72) Inventor: **Richardson, Richard Warren**
**12148 North Tall Tree**
**Dunlap, Illinois 61525 (US)**

(74) Representative: **Wagner, Karl H., Dipl.-Ing.**
**P.O. Box 22 02 46 Gewuerzmuehlstrasse 5**
**D-8000 München 22 (DE)**

Courier Press, Leamington Spa, England.

## Apparatus and method for sensing torch height

This invention relates to a method and an apparatus for determining the spacing of a flame cutting or welding torch from a workpiece by measurement of the torch to workpiece resistance.

Background art

In a flame cutting machine one or more gas operated cutting torches are acted on by a drive mechanism which causes the torches to cut along one or more workpieces in accordance with a predetermined pattern. Efficient use of such machines is dependent on maintaining a precise optimum flame height or spacing of the torch from the associated workpiece as heat concentration varies substantially along the length of the flame. If the torch to workpiece spacing varies significantly in the course of cutting a workpiece, a nonuniform or possibly incomplete cut may be made and heat utilization becomes less efficient. The need for adjustment of torch height in the course of a cutting operation may arise from the fact that the workpiece has a non-planar configuration. Moreover, sensitivity is such that slight irregularities in the surface of nominally flat plate stock may significantly affect cutting efficiency and accuracy.

In some prior flame cutting machines, adjustment of the flame height during the course of a cutting operation, was done manually by an operator who continually observed the cutting operation. A fully manual flame height control system has several disadvantages. First, more or less continuous attention is required and the operator is thereby prevented from accomplishing other tasks during the sometimes lengthy cutting operations. Second, the operator's task becomes more difficult, and quality of results is adversely affected in proportion to the number of torches employed on the cutting machine. Finally, the quality of the flame height control varies widely among different operators and is less than optimum under the best of circumstances. For these reasons, flame cutting machines are frequently provided with means for automatically controlling torch height during cutting operations.

Such automatic control requires a motor or other apparatus for advancing or retracting the torch relative to the workpiece in response to control signals and further requires apparatus for sensing the spacing of the torch from the workpiece surface in order to transmit corrective control signals to the motor when necessary.

Torch to workpiece space sensing devices employed in prior automatic torch height controls have included a variety of wheels, rollers, runners, sliding contacts and electrical capacitance measuring plates which extend from the torch towards the workpiece. These systems are complex, prone to malfunction and maintenance problems and are inherently susceptible to error in the presence of varying conditions, such as slag popping, at the surface of the workpiece. Moreover, such devices do not directly sense the spacing of the workpiece from the torch at the precise point of contact of the flame therewith but are instead displaced to one side of the flame.

Ideally, the sensing devices employed in an automatic torch height control should not require any mechanism extending from the torch to the surface of the workpiece and should act to sense changes in the spacing between the torch and workpiece at the precise point of contact of the flame with the workpiece. Further, such sensing devices and the controls associated therewith should individually control each torch in a multiple torch bank while providing for manual adjustment of the spacing to be maintained at all torches and for manually initiated raising or lowering of all torches simultaneously or with respect to any particular torch individually.

A system for maintaining a predetermined selectable torch to workpiece spacing in a flame cutting machine which does not require sensor structure extending from the torch to the workpiece is described in US—A—3 823 928 which issued on July 16, 1974 to B. L. Stolin and R. D. Brown. The system is sensitive to minute changes in spacing of the torch from the precise point of contact of the flame with the workpiece. For this purpose, an electrical voltage is applied between the torch and the workpiece whereby an electrical current travels through the cutting flame. The flame is effectively a variable electrical resistor, the resistance of which is a function of the spacing of the workpiece from the torch. During operation, any variation of the electrical resistance of the flame is detected and a correction signal is generated to actuate a servomotor which restores the torch to workpiece spacing to the desired value. In one form of the system, a plurality of torches are utilized and the height control system provides for manual selection of a basic reference voltage that determines the automatically maintained spacing of each torch from the associated workpiece while further providing for individual fine adjustment of torch to workpiece spacing at each torch. Also in the preferred form, the control system provides for automatic shifting from a first torch height to a second torch height when the flame controls are shifted from a preheating fuel mixture to the cutting fuel mixture and still further provides a safety shutdown for preventing the automatic height control system from driving a torch towards the workpiece when the flame lengthens abruptly as a result of passing off the edge of the workpiece.

Unfortunately, this system is sensitive to gas flows and mixtures, sensing bias voltage or current variations, and other spurious factors which interfere with its ability to sense torch height above a workpiece in a manufacturing environment.

Reference is further made to US—A— 2 364 645 which discloses an apparatus for maintaining a torch tip in position between predetermined spaced limits parallel to a metal work surface and comprising means for applying a voltage between the worksurface and the torch for causing electrons to flow from the worksurface to the torch through the torch flame and means responsive to variations in the electric conductivity of said flame resulting from variations in the position of said torch tip beyond said limits for restoring said tip into position between said limits.

Disclosure of invention

In one aspect of the invention a method for determining the spacing of a flame cutting or welding torch from a workpiece by measurement of the torch to workpiece resistance is provided, said method comprising:

applying a voltage between the workpiece and the torch for causing electrons to flow from the workpiece to the torch and through the torch flame;

determining the slope of the linear portion of the voltage current characteristic between the torch and the workpiece in the region where this characteristic is proportional to said spacing.

In another aspect of the present invention an apparatus for determining the spacing of a flame cutting or welding torch from a workpiece is provided, said torch having a flame with a voltage-current characteristic having a linear portion at a positive torch to workpiece current, said apparatus comprising:

means for producing a current signal having a plurality of incremental steps such that the electrons flow from the workpiece to the torch through the torch flame, the current level at each step lying substantially along the linear portion of the voltage-current characteristic of the torch flame;

means for detecting the voltage across the torch flame for each incremental step; and

means for determining the slope of said characteristic and for generating a signal representative of said spacing.

Preferred embodiments of the invention are disclosed in the subclaims.

In accordance with the invention as outlined above the flame resistance can be measured substantially without detrimental influence by spurious variables.

Brief description of the drawings

Fig. 1 is a block diagram of an apparatus for controlling the height of a cutting torch above a workpiece;

Fig. 2 is a curve showing voltage-current characteristic with a linear region at a positive current emphasized;

Fig. 3 is a block diagram similar to Fig. 1 but showing a plurality of cutting torches;

Fig. 4 is a view similar to Fig. 2 with the linear region emphasized;

Fig. 5 is a bar graph showing torch floating voltage for various test conditions;

Fig. 6 is a bar graph showing the linear voltage range for various test conditions;

Fig. 7 is a block diagram similar to Fig. 1 but showing another embodiment;

Fig. 8 is a partial flow chart for use with the apparatus of Fig. 7; and

Fig. 9 is a partial flow chart for use with the apparatus of Fig. 7.

Best mode for carrying out the invention

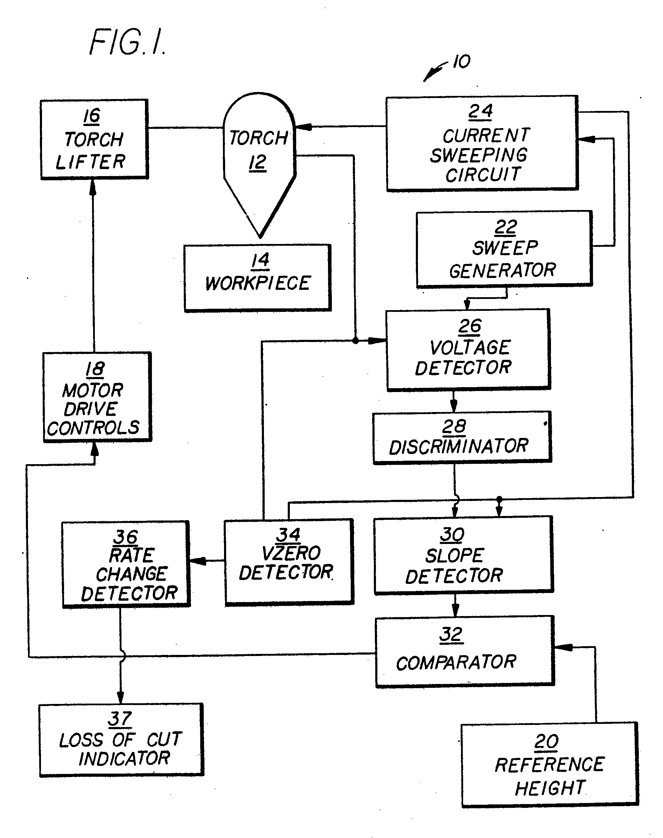

Referring to Fig. 1, a torch control system 10 is shown for controlling the height of a cutting torch 12 above an associated workpiece 14. The system 10 includes a torch lifter or drive motor 16 which effects relative movement between the cutting torch 12 and the workpiece 14 and a control unit 18 which controls operation of the torch lifter 16 to move the torch 12 and workpiece 14 towards or away from each other. The desired spacing between the torch 12 and workpiece 14 is determined by a reference height control unit 20 which is under the control of an operator. The system 10 compares the actual torch height above the workpiece 14 with the desired height set by the operator using the reference height control 20 and directs the motor control unit 18 and torch lifter 16 to drive the torch 12 toward or away from the workpiece 14 until the actual torch height above the workpiece substantially equals the reference height. In this manner the distance between the torch 12 and workpiece 14 is controlled without the need for further operator assistance.

The system 10 also includes a sweep generator 22 which drives a current sweeping circuit 24 which in turn drives current through the torch 12 to the workpiece 14. A voltage detecting circuit 26 detects the torch voltage and produces a signal representative of the torch to workpiece voltage. A discriminator 28 receives the voltage signal from the voltage detector 26 and block the passage of the voltage signal to the slope detector 30 when the voltage level exceeds a preselected value. The slope detector 30 receives the voltage signal from the discriminator 28 and a current signal from the current sweeping circuit 24 and produces a resistance signal. The resistance signal is representative of the spacing between the torch 12 and workpiece 14. The resistance signal is compared with a reference signal from the reference height control 20 by a comparator 32 which activates the motor controls 18. There is also a voltage detector 34 which detects the torch to workpiece voltage, VZERO, when the current from the torch 12 through the flame to the workpiece 14 is zero. A rate detector 36 senses an abrupt negatively going change in VZERO and indicates a loss of cut as will be more fully explained below.

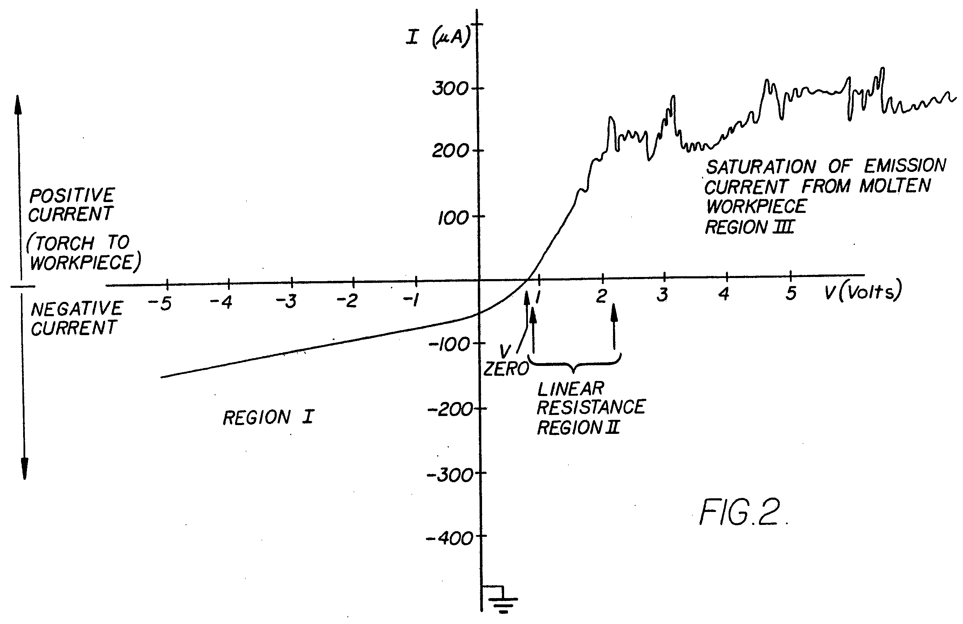

Referring to Fig. 2, a voltage-current characteristic, V-I curve, has three regions, Regions I, II and III.

Region I is a linear region wherein the flame current from the torch (12) to the workpiece 14 is negative. This region is relatively non-noisy, but the slope of the V-I curve is relatively flat. In this region electrons flow from the torch 12 through the flame to the workpiece 14 which sets up two basic resistances—flame resistance and flame-to-torch resistance. Flame-to-torch resistance arises from the difficulty encountered in trying to remove electrons from the torch surface. The flame-to-torch resistance is typically ten times the height dependent flame resistance; hence, sensitivity problems are encountered when sensing height in Region I. For example, a ten percent change in flame length would cause a ten percent increase in the flame resistance and would not affect the flame-to-torch resistance which would result in only about a one percent change in the total resistance; whereas, a one percent change in flame-to-torch resistance results in nearly a one percent change in total resistance. Thus, it is difficult to detect a change in resistance due to a change in flame length.

Region II is a linear region wherein the torch-to-workpiece current is positive. The slope of the V-I curve is much steeper in Region II than Region I. Electrons flow from the workpiece 14 which is hot because it is heated by the torch flame. Since the hot workpiece emits many free electrons, the workpiece-to-flame resistance is very small compared with the flame resistance so that a change in the flame length changes the flame resistance which causes a corresponding change in the total resistance. In Region II the flame resistance has maximum sensitivity to flame length which is the distance of the torch from the workpiece 14.

Region III is a positive torch current region in which the ability of the workpiece 14 to deliver electrons saturates. This region provides little useful torch height information. Regions I and III each contain a large non-flame length dependent resistance which adversely affects the net flame length sensitivity. The steeper linear V-I curve of Region II is less sensitive to operating flame variables such as gas mixture, leakage resistance, etc.

In Region II the V-I curve does not cross voltage or current axes at zero. There is a voltage at zero current, VZERO. This voltage is produced by thermal effects associated with the flame and varies with flame cutting conditions. The linear region at voltages more positive than this flame generated voltage, VZERO, comprises the height dependent flame resistance. Additionally, a sudden decrease of this voltage is indicative of sudden torch travel over cold metal which means the cut has been lost. This abrupt drop in the voltage, VZERO, is sensed by the VZERO rate of change detector 36 and indicated by a loss of cut indicator 37. The output from the rate of change detector 36 can also be used to raise the torch 12 when the cut is lost.

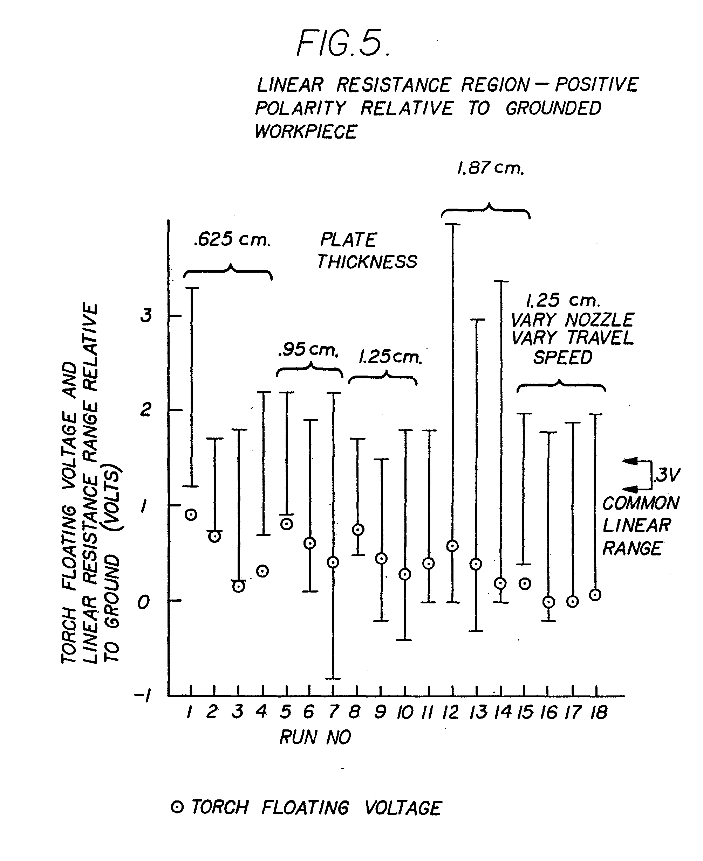

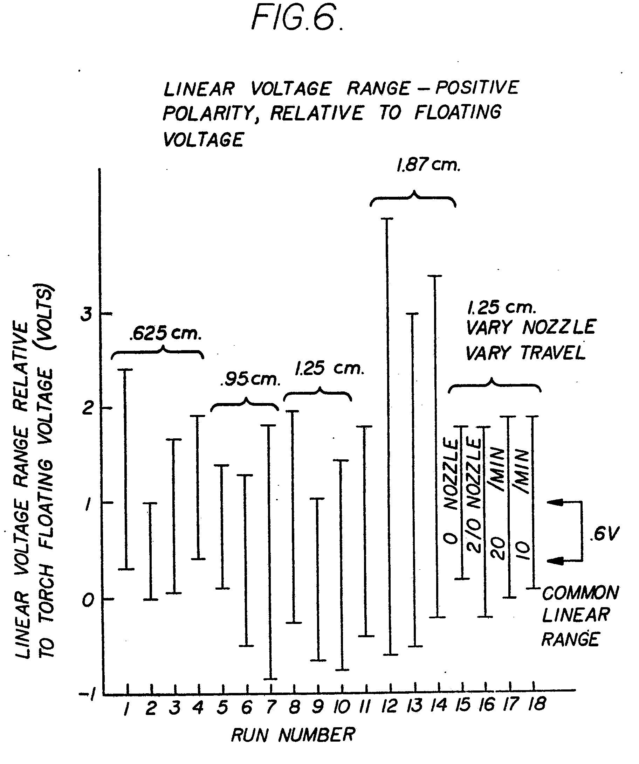

Referring to Figs. 5 and 6, a complicating factor results from the existence of the flame generated voltage, VZERO, in that the voltage varies with flame cutting conditions. The test results summarized in Fig. 5 show that there is a common linear V-I range of about 0.3v relative to ground at various conditions. VZERO is indicated by the encircled data points for each test run. VZERO is somewhat erratic for fixed conditions varying by as much as $\pm 0.1$ volt. On the other hand, Fig. 6 shows that there is a common linear V-I range of about 0.6v relative to VZERO at various conditions. The common linear region is increased from 0.3v to 0.6v centered at about 0.7v above VZERO. This common linear region is the most desirable linear region in which to sense resistance because it is common to the variables encountered in an industrial environment.

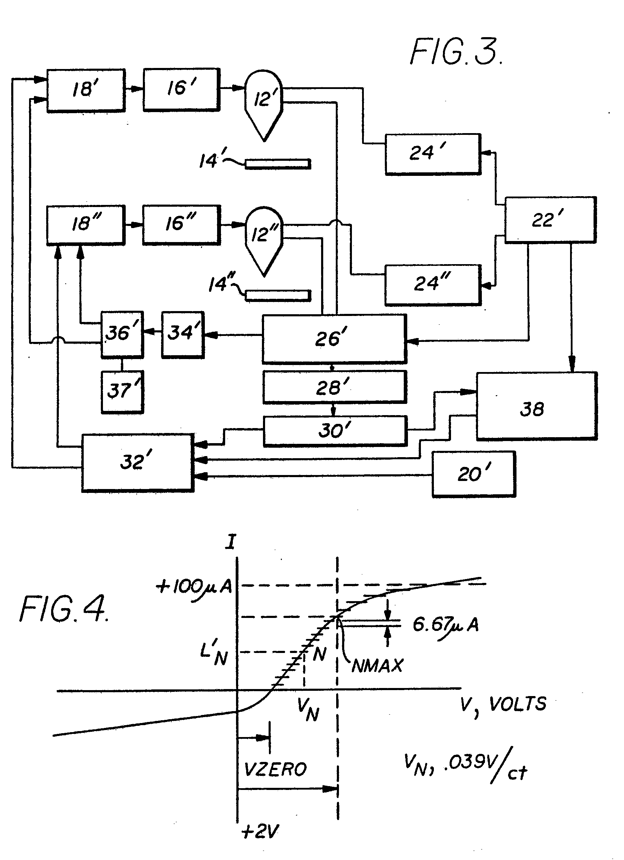

Referring to Figs. 1 and 3, the control system 10 causes electrons to flow from the workpiece 14 through the flame to the torch 12 which creates a torch-to-workpiece voltage which is representative of the flame length. This torch-to-workpiece voltage is representative of the flame length because the torch 12 is biased into Region II (Fig. 2) and the current driven by the current sweeping circuit 26 ranges from about $0\mu a$ to about $100\mu a$ or some other value which lies in the linear region (Region II) of the V-I curve. Various current levels are shown in Fig. 4.

The sweep generator 22 can be of any basic form such as a clock counter or other function generator, for example. The current sweeping circuit 24 is a voltage to current converter which is also well known in the art. The waveform of the output voltage of the sweep generator 22 is preferably a staircase configuration as is the output current from the current sweeping circuit 24. These circuits and other circuits described herein are well known in the art and available in such handbooks as Guidebook of Electronic Circuits, Sourcebook of Electronic Circuits, and Electronic Circuits Manual by John Markus, as well as other handbooks in this field.

Preferably, the sweep generator 22 produces a known output voltage in incremental steps which is received by the current sweeping circuit 24 which converts the incremental voltage to an incremental current. When the output voltage is in 16 incremental steps between about 0 to 10v, and there is a conversion factor of about $-10.67\mu a/v$, the output current is in 16 incremental steps between about 0 to $100\mu a$ which yields $6.67\mu a$ per step and generally falls within the common linear region of the V-I curve. This current biasing approach insures that all measured voltages are above the flame generated voltage, VZERO, i.e., in Region II.

The sweep generator 22 is also connected to the voltage detecting circuit 26 which detects the torch-to-workpiece voltage at each current step. The voltage and current at each step are known. Since the current is fixed, the voltage level varies with torch-to-workpiece resistance which, in the common linear region, is essentially flame resistance. Because flame resistance varies with flame length, the voltage level varies with flame length which is equal to the spacing between the torch 12 and workpiece 14.

The output from the voltage detector 26 is received by the discriminator 28 which blocks voltage levels which are more than about 1.0 volt above VZERO and passes the voltages less than about 1.0 volt above VZERO. The discriminator 28 insures that in accordance with the invention the voltages received by the slope detector 30 fall within the common linear region of the V-I curve (Fig. 6).

The slope detector 30 receives the voltage output from the discriminator 28 and a current level indication from the current sweeping circuit 24. The output of the slope detector 30 is the slope of the V-I curve which is the flame resistance. The slope detector 30 can detect the slope of the V-I curve for each incremental current step and the corresponding voltage or detect the slope for the average current and voltage.

Dividing the torch-to-workpiece voltage minus VZERO by the current at each step yields the resistance at each step or a least squares curve fit could be used to determine the average resistance over all steps.

The output signal from the slope detector 30 which is representative of flame resistance and thus flame length is compared with the reference signal from the reference height control 20 at the comparator 32 to operate the motor drive controls 18.

The VZERO detector 34 monitors the torch-to-workpiece voltage and the rate detector 36 senses an abrupt negative going change in VZERO to thereby sense a loss of cut. The rate detector 36 then indicates a loss of cut. The change in voltage is on the order of about 0.5v.

Referring to Fig. 3, a torch control system 10' for controlling the movement of a plurality of torches 12', 12" includes storage means 38 for storing the voltage levels, the current levels or both for use at a later time. Preferably, the slope information is stored and updated for each torch during each cycle of operation as the sweep generator 22' scans the torches 12', 12".

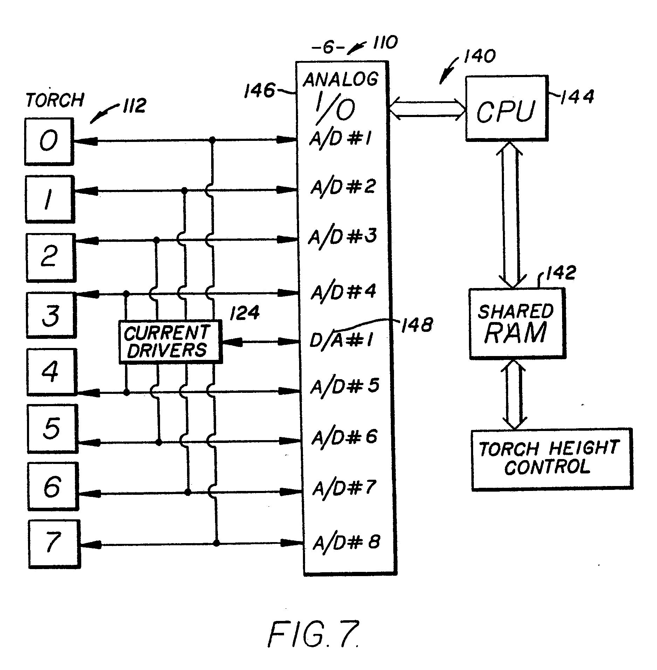

Referring to Fig. 7, the control system 110 employs a computer 140 for generating and storing information representative of the spacing of a cutting torch 112 from a workpiece. The computer 140 has a storage means 142, a central processing unit 144 and an input/output device 146. The input/output device includes a digital-to-analog convertor 148 for driving a current sweeping circuit or current driver 124 and analog-to-digital convertors for receiving torch voltage and current information. The computer 140 basically performs the functions performed by the voltage detector 26, discriminator 28 and slope detector 30 of Figs. 1 and 3 and stores the information in memory 142 and also monitors VZERO.

Industrial applicability

In operation, a method for generating a signal representative of the spacing of a cutting torch 12 from a workpiece 14 is provided by biasing the torch 12 positive with respect to the workpiece 14 so that a positive current flows from the torch 12 to the workpiece 14, generating a voltage-current characteristic having a linear portion at a positive current, producing a current signal having a plurality of incremental steps, driving the current through the torch flame, maintaining the current substantially along the linear portion of the voltage-current characteristic, detecting the voltage across the torch flame, and determining the slope of the voltage-current characteristic using the detected voltage.

The inverse slope of the voltage-current characteristic (Figs. 1 and 4) is the flame resistance. Since the current is fixed, the voltage varies with the flame resistance. Flame resistance varies with flame length which is the distance between the torch 12 and workpiece 14. Thus, the voltage varies with changes in the spacing between the torch 12 and workpiece 14.

Referring to Fig. 1, the sweep generator 22 produces a voltage signal having a plurality of steps which is changed to a current signal having an equal number of steps by the current sweeping circuit 24. The current sweeping circuit 24 drives the output current from the torch 12 through the flame to the workpiece 14 so that electrons flow from the hot workpiece 14 through the flame to the torch 12. Since the torch flame resists current flow therethrough, a voltage is developed across the flame. The voltage detector 26 detects the torch-to-workpiece voltage and the discriminator 28 discards voltages greater than about 1.0 volt above VZERO. The slope detector 30 receives the voltage and current information and produces the flame resistance which is the slope of the V-I curve formed by the injected current and the detected voltage.

The comparator 32 receives the slope information from the slope detector 30 and a reference signal from the reference height control 20 to drive the torch 12 away from the workpiece 14 if the measured slope is less than the reference slope and toward the workpiece if the measured slope is greater than the reference slope. If the slopes are the same, the torch 12 does not move because it is correctly positioned.

The VZERO detector 34 monitors the torch-to-workpiece voltage when the flame current is zero and the rate detector 36 senses an abrupt negative going change in VZERO and the indicator 37 indicates a loss of cut.

Referring to Fig. 3, the sweep generator 22' simultaneously delivers the stepped output voltage to the current sweeping circuits 24', 24". While the current sweeping circuits 24' and 24" are activated, the associated components function as described above with the exception of the slope detector 30' which can function normally as described above or can pass the slope information to the storage means 38. The storage means 38 transmits the slope information to the comparator 32' for comparison with the reference height information and operation of the torches 12', 12"*.

Referring to Figs. 7—9, the current sweeping circuits or current drivers 124 drive an output current through the torches 112 so that the torch current falls within the linear range which is experimentally found to persist up to about 1.0 volt above the flame generated voltage. The input to the current drivers 124 is a repeating bias step and the output is an increasing bias current step which is driven through the flame. When the input bias voltage is in 16 incremental steps between about 0 to —10v, and there is a conversion factor of about —10.0 microamperes per volt, the output current is in 16 incremental steps between about 0 to 100 microamperes which falls mostly on the common linear V-I curve. This current biasing approach insures that all data points are above VZERO.

The input voltage bias step is delivered by a digital-to-analog converter, D/A1, which is part of input/output interface 146. I/O 146 contains eight analog-to-digital convertors, A/D1 through A/D8, which receive the flame voltage and VZERO information.

Referring to Figs. 7—9, the apparatus 110 can be called a torch flame signal processing system, SPS, because it processes the flame information according to the flow chart which primarily consists of two routines, SCAN and REDUCE. For the flow chart, the following labels are used:

| Label | Definition |
|---|---|
| N | data point index |
| NMAX | number of data points per torch (current levels) |
| L | torch number |
| LMAX | number of torches |
| I(N) | output current to torches |
| VSTOR | torch voltage storage pointer |
| V(N,L) | torch voltage (torch L, Point N) |
| SNV(L) | $N^{NV(N,L)}$ |
| SV(L) | $N^{V(N,L)}$ |
| NSV(L) | $N_N V(N,L)$ |
| NMAX(L) | number of incremental current levels in linear range |
| D(L) | (NMAX(L)+1) (NMAX(L)) (NMAX(L)+2)/12 |
| R(L) | (SNV(L)—NSV(L))/D(L), flame resistance |
| VZERO(L) | flame generated voltage for torch L from least squares curve fit |
| VZERO(O,L) | torch voltage at zero output current level |
| ADC | analog-to-digital convertor multiplexer code |

The input voltage to the current drivers 124 is commanded by processor 144 via D/A1. This voltage is in the form of a repeating bias step. Each of the current drivers 124 converts this voltage step by the factor of about —10 microamperes per volt to an increasing bias current step which is driven through the flame load. The output voltage of each of the current drivers 124 is the voltage across its corresponding load. This voltage is fed back to the processor 16 via A/D1 through A/D8. Thus, the processor has a digital representation of the commanded load current and each sensed load voltage from which each flame V-I curve can be calculated. The time between samples for each torch is preferably approximately 100 microseconds which allows the analog-to-digital convertors sufficient time to recover from saturation which can occur when a torch with no flame is encountered. An infinite load created by a no flame condition would ordinarily cause the output of the current driver 124 to saturate.

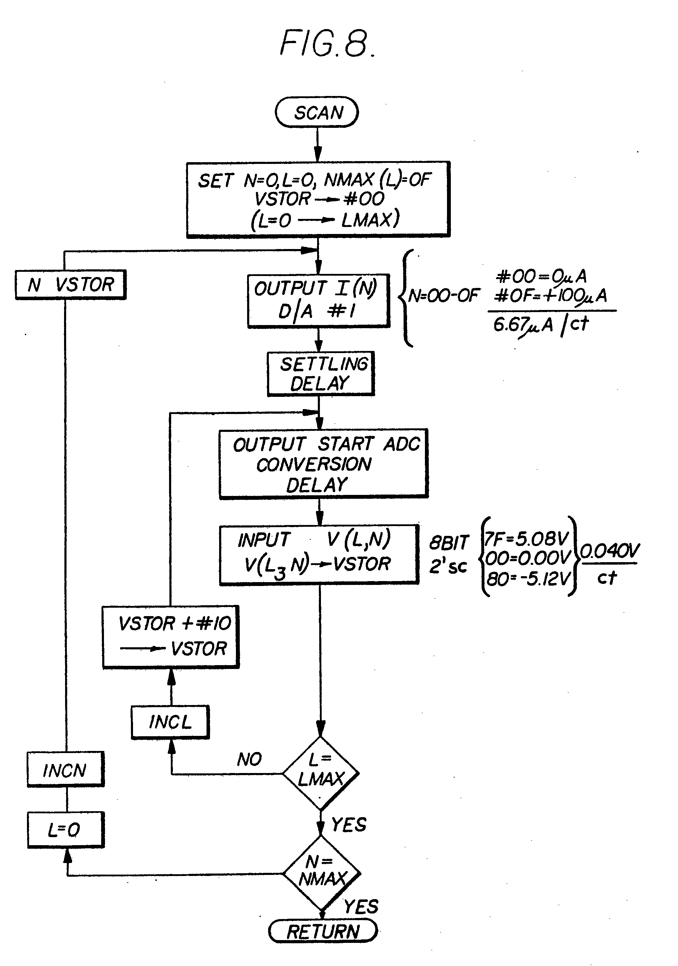

Referring to Fig. 8, the flow chart for routine SCAN shows that all torches are simultaneously biased to one of 16 current levels between 0 and +100 microamperes (N=0—15(F)). At a given bias current each torch voltage is converted to 2's complement binary and read in sequence. The data are stored in RAM memory 142 in 16 byte blocks. The high 4-bits of the page address designates the torch (L=0—7, torch #0—7) and the low 4-bits the bias current level (N=0—15) for the configuration of Fig. 7 with 8 torches 112.

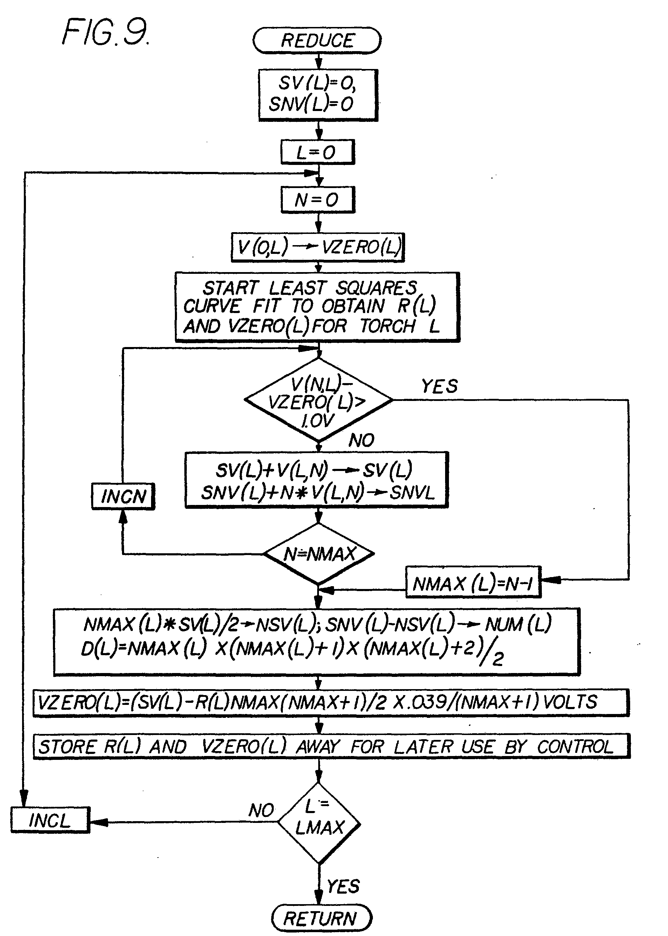

Referring to Fig. 9, the REDUCE routine calculates a least squares fit of the voltage points recorded by the SCAN routine, and stores R(L), the calculated flame resistance, and VZERO, the voltage of the flame with no current applied. The data is reduced by applying a 16 point least squares fit of a straight line to the V-I curve for each torch. The slope of this line is the flame resistance and is proportional to flame height. The curve fit will be effectively less than 16 points (i.e. NMAX(L)) for those curves for which the flame voltage reaches 1.0 volt above VZERO before the last current bias level is reached (100) microamperes, N=15). The flame resistance will be placed at 8 locations in the memory 142 as 8-bit natural binary number with a scale factor of 730 ohms/ct. This allows a resistance of 186.2 Kohms full scale. If the flame resistance exceeds this range of indication is sent to the control system that either the flame is extinguished or an edge of the workpiece has been encountered. This indication is in the form of a flame resistance indication greater than about 186.2 kohms.

'The floating voltage will also be placed in memory for each torch to the scale of the input voltages. With a 50 microsecond A/D conversion time, the SCAN routine should require less than 10 milliseconds for eight torches. The reduce routine requires about 5 milliseconds per torch. This means that torch height information will be updated about every 50 milliseconds for eight torches.

Other aspects, features and advantages of this invention can be obtained from a study of the drawings, the disclosure and the appended claims.

Above, the flame generated voltage is referred to as the floating voltage because the voltage is present even when there is no current passing through the flame and because the voltage level varies from one operation to the next operation and during each operation due to workpiece temperature and other continually changing variables.

*The other reference numerals are used similarly to those in Fig. 1.

## Claims

1. A method for generating a signal representative of the spacing of a flame cutting or welding torch (12) from a workpiece (14) by measurement of the torch to workpiece resistance comprising

applying a voltage between the workpiece (14) and the torch (12) for causing electrons to flow from the workpiece (14) to the torch (12), through the torch flame,
determining the slope of the linear portion of the voltage current characteristic between the torch and the workpiece in the region where the slope is a function of said spacing.

2. A method, as set forth in claim 1, including producing a current signal in a plurality of incremental steps, and detecting the corresponding voltage across the torch flame.

3. An apparatus (10) for determining the spacing of a flame cutting or welding torch from a workpiece, said torch (12) having a flame with a voltage-current characteristic having a linear portion at a positive torch-to-workpiece current, comprising

means (22, 24) for producing a current signal having a plurality of incremental steps such that the electrons flow from the workpiece to the torch through the torch flame, the current level at each step lying substantially along the linear portion of the voltage-current characteristic of the torch flame;
means (26) for detecting the voltage across the torch flame for each incremental step; and
means (30) for determining the slope of said characteristic and for generating a signal representative of said spacing.

4. An apparatus (10) as set forth in claim 3 wherein said means (22, 24) for producing current increments in step-wise fashion, include a zero current step.

5. An apparatus (10), as set forth in claim 4 including means (30) for sensing an abrupt negative-going change in the voltage of said zero current step.

6. An apparatus (10), as set forth in any of claims 3—5, including means (16, 18) for effecting relative movement between the torch (12) and the workpiece (14); and means responsive to the detecting means (26) for operating the moving means (28) and controlling the distance between the torch (12) and the workpiece (14).

7. An apparatus (10), as set forth in any of claims 3—6, wherein the means (22, 24) for producing current increments produces current in the range of 0 to 100 microamperes.

8. An apparatus (10), as set forth in any of claims 3—7, wherein the current is produced in incremental steps of 6,67 microamperes.

9. An apparatus (10), as set forth in claims 3 or 4, including a plurality of torches (12', 12") and associated workpieces (14', 14") and means (22') for connecting the producing means (22, 24) and detecting means (26) to each of said torches and associated workpieces.

10. An apparatus (10), as set forth in claim 5, including means (38) for storing the voltage information.

## Patentansprüche

1. Verfahren zur Erzeugung eines Signals, welches repräsentativ ist für den Abstand einer Schneidflamme oder eines Schweißbrenners (12) gegenüber einem Werkstück (14) unter Verwendung einer Messung des Schweißbrenner/Werkstück-Widerstandswerts, wobei folgendes vorgesehen ist:

Anlegen einer Spannung zwischen dem Werkstück (14) und dem Schweißbrenner (12) um zu bewirken, daß Elektronen vom Werkstück (14) zum Schweißbrenner (12) durch die Schweißflamme fließen,
Bestimmung der Neigung des Linearteils der Spannungs/Strom-Kennlinie zwischen dem Brenner und dem Werkstück in der Zone, wo die Neigung eine Funktion dieses Abstands ist.

2. Verfahren nach Anspruch 1, gekennzeichnet durch die Erzeugung eines Stromsignals in einer Vielzahl von inkrementalen Schritten und Feststellung der entsprechenden Spannung an der Schweißbrennerflamme.

3. Vorrichtung (10) zur Bestimmung des Abstands einer Schneidflamme oder eines Schweißbrenners gegenüber einem Werkstück, wobei der Brenner (12) eine Flamme mit einer Spannungs/Strom-Kennlinie aufweist, die einen Linearteil bei einem positiven Brenner/Werkstück-Strom besitzt, wobei folgendes vorgesehen ist:

Mittel (22, 24) zur Erzeugung eines Stromsignals mit einer Vielzahl von inkrementalen Schritten derart, daß die Elektronen vom Werkstück zum Brenner durch die Brennerflamme fließen, wobei das Stromniveau an jedem Schritt im wesentlichen längs des Linearteils der Spannungs/Strom-Kennlinie der Brennerflamme liegt,

Mittel (26) zur Feststellung der Spannung an der Brennerflamme für jeden inkrementalen Schritt, und

Mittel (30) zur Bestimmung der Neigung der Kennlinie zur Erzeugung eines für den erwähnten Abstand repräsentativen Signals.

4. Vorrichtung (10) nach Anspruch 3, wobei die Mittel (22, 24) zur schrittweisen Erzeugung der Strominkremente einen Nullstromschritt aufweisen.

5. Vorrichtung (10) nach Anspruch 4 mit Mitteln (30) zum Abfühlen einer abrupten ins Negative gehenden Änderung bei der Spannung des erwähnten Nullstromschrittes.

6. Vorrichtung (10) nach einem der Ansprüche 3 bis 5 mit Mitteln (16, 18) zur Bewirkung einer Relativbewegung zwischen dem Brenner (12) und dem Werkstück (14) und mit Mitteln, die auf die Feststellmittel (26) ansprechen, um die Bewegungsmittel (28) zu betätigen und den Abstand zwischen dem Brenner (12) und dem Werkstück (14) zu steuern.

7. Vorrichtung (10) nach einem der Ansprüche 3 bis 6, wobei die Mittel (22, 24) zur Erzeugung der Strominkremente Strom im Bereich von 0 bis 100 Mikroamperes erzeugen.

8. Vorrichtung (10) nach eimem der Ansprüche 3 bis 7 wobei der Strom in inkrementalen Schritten von 6,67 Mikroamperes erzeugt wird.

9. Vorrichtung (10) nach Anspruch 3 oder 4 mit einer Vielzahl von Brennern (12', 12'') und zugehörigen Werkstücken (14', 14'') und mit Mitteln (22') zur Verbindung der Erzeugungsmittel (22, 24) und der Feststellmittel (26) mit jedem der Brenner und zugehörigen Werkstücke.

10. Vorrichtung (10) nach Anspruch 5 mit Mitteln (38) zur Speicherung der Spannungsinformation.

**Revendications**

1. Procédé pour engendrer un signal représentatif de l'espacement entre la flamme d'une torche de soudage ou de découpage (12) et une pièce (14) en mesurant la résistance entre la torche et la pièce, consistant:

— à appliquer une tension entre la pièce (14) et la torche (12) afin de faire circuler des électrons de la pièce (14) à la torche (12) à travers la flamme de la torche;
— à déterminer la pente de la partie linéaire de la caractéristique tension intensité entre la torche et la pièce dans la région où la pente est fonction dudit espacement.

2. Procédé selon la revendication 1, consistant à produire un signal de courant comprenant plusieurs échelons élémentaires ou incréments et à détecter la tension correspondante à travers la flamme de la torche.

3. Appareil (10) pour déterminer l'espacement entre la flamme d'une torche de soudage et de découpage et une pièce, ladite torche (12) ayant une flamme avec une caractéristique tension intensité présentant une partie linéaire dans une région correspondant à un courant positif entre la torche et la pièce, comprenant:

— des moyens (22, 24) pour produire un signal de courant ayant plusieurs échelons intermédiaires ou incréments de sorte que quand un courant d'électrons circule de la pièce vers la torche à travers la flamme, le niveau du courant à chaque échelon est pratiquement situé le long de la partie linéaire de la caractéristique tension intensité de la flamme de la torche;
— des moyens (26) pour détecter la tension à travers la flamme de la torche à chaque échelon élémentaire ou incrément; et
— des moyens (30) pour déterminer la pente de ladite caractéristique et pour engendrer un signal représentatif dudit espacement.

4. Appareil (10) selon la revendication 3, dans lequel lesdits moyens (22, 24) pour produire des incréments de courant par échelons comprennent un échelon de courant zéro.

5. Appareil (10) selon la revendication 4, comprenant des moyens (30) pour percevoir un changement brusque orienté vers le négatif de la tension dudit échelon de courant zéro.

6. Appareil (10) selon l'une quelconque des revendications 3—5, comprenant des moyens (16, 18) pour effectuer un mouvement relatif entre la torche (12) et la pièce (14); et

— des moyens qui en réponse aux moyens de détection (26) actionnent les moyens de déplacement (28) et règlent la distance entre la torche (12) et la pièce (14).

15 **0 020 871** 16

7. Appareil (10) selon l'une quelconque des revendications 3—6, dans lequel les moyens (22, 24) pour produire des incréments de courant produisent un courant de l'ordre de 0 à 100 microampères.

8. Appareil (10) selon l'une quelconque des revendications 3—7, dans lequel le courant est produit par échelons élémentaires ou incréments de 6,67 microampères.

9. Appareil (10) selon les revendications 3 ou 4, comprenant plusieurs torches (12′, 12″) et des pièces associées (14′, 14″), et des moyens (22) pour connecter les moyens producteurs (22, 24) et les moyens de détection (26) à chacune desdites torches et desdites pièces associées.

10. Appareil (10) selon la revendication 5, comprenant des moyens (38) pour conserver l'information de tension.

FIG.1.

FIG.2.

FIG.3.

FIG.4.

$+100\mu A$

$6.67\mu A$

$L'_N$

$N$

NMAX

$V_N$

$V$, VOLTS

VZERO

$V_N$, $.039V/ct$

$+2V$

*FIG.5.*

LINEAR RESISTANCE REGION — POSITIVE POLARITY RELATIVE TO GROUNDED WORKPIECE

⊙ TORCH FLOATING VOLTAGE

# FIG.6.

LINEAR VOLTAGE RANGE – POSITIVE POLARITY, RELATIVE TO FLOATING VOLTAGE

FIG. 7.

## FIG.8.

SCAN

SET N=O, L=O, NMAX (L)=OF
VSTOR → #OO
(L=O → LMAX)

N VSTOR

OUTPUT I (N)
D/A #1

$\left\{ N=OO\text{-}OF \right.$   #OO = O μA
#OF = +1OO μA
6.67 μA / ct

SETTLING
DELAY

OUTPUT START ADC
CONVERSION
DELAY

INPUT   V (L,N)
V(L$_3$N) → VSTOR

8BIT
2'sc
$\left\{ \begin{matrix} 7F=5.08V \\ OO=O.OOV \\ 8O=-5.12V \end{matrix} \right\}$ $\dfrac{0.040V}{ct}$

VSTOR +#1O
→ VSTOR

INCL

INCN

NO   L=
LMAX

L=O

YES

N=
NMAX

YES

RETURN

*FIG.9.*

```
              ( REDUCE )
                  │
          ┌───────────────┐
          │   SV(L)=0,     │
          │   SNV(L)=0     │
          └───────────────┘
                  │
              ┌───────┐
              │  L=0  │
              └───────┘
                  │
              ┌───────┐
              │  N=0  │
              └───────┘
                  │
          ┌─────────────────┐
          │ V(0,L) → VZERO(L)│
          └─────────────────┘
                  │
      ┌───────────────────────────┐
      │ START LEAST SQUARES        │
      │ CURVE FIT TO OBTAIN R(L)    │
      │ AND VZERO(L) FOR TORCH L    │
      └───────────────────────────┘
                  │
              ╱ V(N,L)- ╲
             ╱ VZERO(L)> ╲ ───── YES
             ╲   1.0V    ╱
              ╲    NO   ╱
                  │
      ┌───────────────────────────┐
      │ SV(L)+V(L,N) → SV(L)        │      ┌───────┐
      │ SNV(L)+N*V(L,N) → SNVL      │      │ INCN  │
      └───────────────────────────┘      └───────┘
                  │
              ╱ N=NMAX ╲
              ╲        ╱
                  │              ┌───────────────┐
                  │              │  NMAX(L)=N-1   │
                  │              └───────────────┘
      ┌───────────────────────────────────────────┐
      │ NMAX(L)*SV(L)/2→NSV(L); SNV(L)-NSV(L)→ NUM(L)│
      │ D(L)=NMAX(L) X(NMAX(L)+1)X(NMAX(L)+2)/2     │
      └───────────────────────────────────────────┘
                  │
  ┌─────────────────────────────────────────────────────────┐
  │ VZERO(L)=(SV(L)-R(L)NMAX(NMAX+1)/2 X.039/(NMAX+1) VOLTS   │
  └─────────────────────────────────────────────────────────┘
                  │
  ┌─────────────────────────────────────────────────────────┐
  │ STORE R(L) AND VZERO(L) AWAY FOR LATER USE BY CONTROL     │
  └─────────────────────────────────────────────────────────┘
                  │
  ┌───────┐      ╱  L=  ╲
  │ INCL  │◄── NO╱ LMAX  ╲
  └───────┘      ╲      ╱
                  │ YES
              ( RETURN )
```